(19) Europäisches Patentamt
European Patent Office
Office européen des brevets

(11) **EP 4 711 349 A1**

(12) **EUROPEAN PATENT APPLICATION**
published in accordance with Art. 153(4) EPC

(43) Date of publication:
**18.03.2026 Bulletin 2026/12**

(21) Application number: **24859147.1**

(22) Date of filing: **01.07.2024**

(51) International Patent Classification (IPC):
*C04B 35/587* (2006.01)   *B28B 3/12* (2006.01)
*B32B 18/00* (2006.01)   *H05K 1/03* (2006.01)

(52) Cooperative Patent Classification (CPC):
**B28B 3/12; B32B 18/00; C04B 35/587; H05K 1/03**

(86) International application number:
**PCT/JP2024/023822**

(87) International publication number:
**WO 2025/047102 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023 JP 2023141423**

(71) Applicant: **Niterra Materials Co., Ltd.
Yokohama-shi, Kanagawa 235-0032 (JP)**

(72) Inventor: **KANAHARA, Keita
Yokohama-shi, Kanagawa 235-0032 (JP)**

(74) Representative: **Hoffmann Eitle
Patent- und Rechtsanwälte PartmbB
Arabellastraße 30
81925 München (DE)**

(54) **SILICON NITRIDE SUBSTRATE AND SILICON NITRIDE SUBSTRATE PRODUCTION METHOD**

(57) There are provided a silicon nitride substrate and a method for producing a silicon nitride substrate produced by favorably laminating green sheets. A silicon nitride substrate according to an embodiment includes a major layer and an intermediate layer as observed in dark-field with an optical microscope in a cross section, in which the intermediate layer is darker than the major layer. A color difference between the major layer and the intermediate layer is not less than 0.1. $m+1$ of the major layers and $m$ of the intermediate layers are alternately arranged in a thickness direction. A color difference between an $n$th major layer and an nth intermediate layer from one surface ($n$ being an integer) is taken as *CDna*. A color difference between a ($n$+1)th major layer and the $n$th intermediate layer is taken as *CDnb*. In such a case, a first condition and a second condition are satisfied for all values of $n$ from 1 to $m$. The first condition is when there is a continuous region having a length of not less than 100 μm in a first direction in which $0.1 \leq CDna \leq 1.4$; and the first direction is parallel to the cross section and perpendicular to the thickness direction. The second condition is when there is a continuous region having a length of not less than 100 μm in the first direction in which $0.1 \leq CDnb \leq 1.4$.

FIG. 1

EP 4 711 349 A1

## Description

[Technical Field]

Embodiments relate to a silicon nitride substrate and a silicon nitride substrate production method.

[Background Art]

In recent years, power electronics, next-generation power semiconductors, and other semiconductor elements that need a large current are being developed. With the development of such semiconductor elements, the demand for ceramic substrates having good heat dissipation and high electrical insulation is increasing year by year. In particular, the heat generation of semiconductor elements is increasing as the semiconductor elements become smaller and more powerful. There is a tendency for ceramic substrates to be thinner to dissipate heat efficiently.

On the other hand, ceramic substrates with larger shapes are being produced to reduce the ceramic substrate production cost. Among ceramic substrates, silicon nitride substrates have high strength, high toughness, and good heat dissipation. Patent Literature 1 discusses a silicon nitride substrate having a size of 220 mm×220 mm×0.32 mm.

Also, for silicon nitride heat dissipation members, a method in which a thick heat dissipation member is obtained by laminating materials has been discussed (Patent Literature 2). According to Patent Literature 2, sintered bodies that have a thickness of 0.03 to 1.0 mm per layer are laminated. A member that has an overall thickness of 0.1 to 10 mm is obtained thereby.

[Prior Art Documents]

[Patent Literature]

Patent Literature 1: Japanese Patent No. 6399252
Patent Literature 2: JP-A 2000-72552 (Kokai)

[Summary of Invention]

[Problem to be Solved by the Invention]

In the production of a silicon nitride substrate, a green sheet is made by sheet forming. A thin silicon nitride substrate is produced by sintering a single green sheet. In one method for producing a thick silicon nitride substrate, thin green sheets are laminated. A thick laminated body made of multiple green sheets is made by laminating. A thick silicon nitride substrate is produced by dewaxing and sintering the laminated body. According to this method, a large and thick silicon nitride substrate can be produced with good cost performance.

When multiple large green sheets are laminated according to the method described above, it is favorable for the green sheets to be sufficiently closely adhered to each other. If the adhesion between the green sheets is poor, the silicon nitride substrate that is dewaxed and sintered has a problem in which the thermal conductivity or the bending strength is reduced.

Embodiments of the invention were carried out based on this problem, and provide a silicon nitride substrate and a method for producing a silicon nitride substrate produced by favorably laminating green sheets.

[Means for Solving the Problem]

A silicon nitride substrate according to an embodiment includes a major layer and an intermediate layer as observed in dark-field with an optical microscope in a cross section of the silicon nitride substrate along a thickness direction, in which the intermediate layer is darker than the major layer. A color difference between the major layer and the intermediate layer is not less than 0.1. m+1 of the major layers and m of the intermediate layers are alternately arranged in the thickness direction. A color difference between an nth major layer and an $nth$ intermediate layer from one surface of the silicon nitride substrate (n being an integer) is taken as $CDna$. A color difference between a (n+1)th major layer and the nth intermediate layer is taken as $CDnb$. In such a case, a first condition and a second condition are satisfied for all values of $n$ from 1 to m. The first condition is when there is a continuous region having a length of not less than 100 $\mu$m in a first direction in which $0.1 \leq CDna \leq 1.4$; and the first direction is parallel to the cross section and perpendicular to the thickness direction. The second condition is when there is a continuous region having a length of not less than 100 $\mu$m in the first direction in

which $0.1 \le CDnb \le 1.4$.

A silicon nitride substrate production method according to an embodiment includes making a slurry, making a green sheet, making a laminated body, and making and sintering a dewaxed body. The making of the slurry includes mixing an organic solvent and a binder with a silicon nitride powder and a sintering aid powder. The making of the green sheet includes forming the slurry. The making of the laminated body includes overlaying the multiple green sheets at a temperature of not less than 60 °C under a pressure of not less than 0.1 MPa. The making of the dewaxed body includes heat-treating the laminated body at a temperature of not more than 1,000 °C. The sintering includes heating the dewaxed body at a temperature of not less than 1,600 °C and not more than 2,000 °C.

[Brief Description of Drawings]

[FIG. 1]

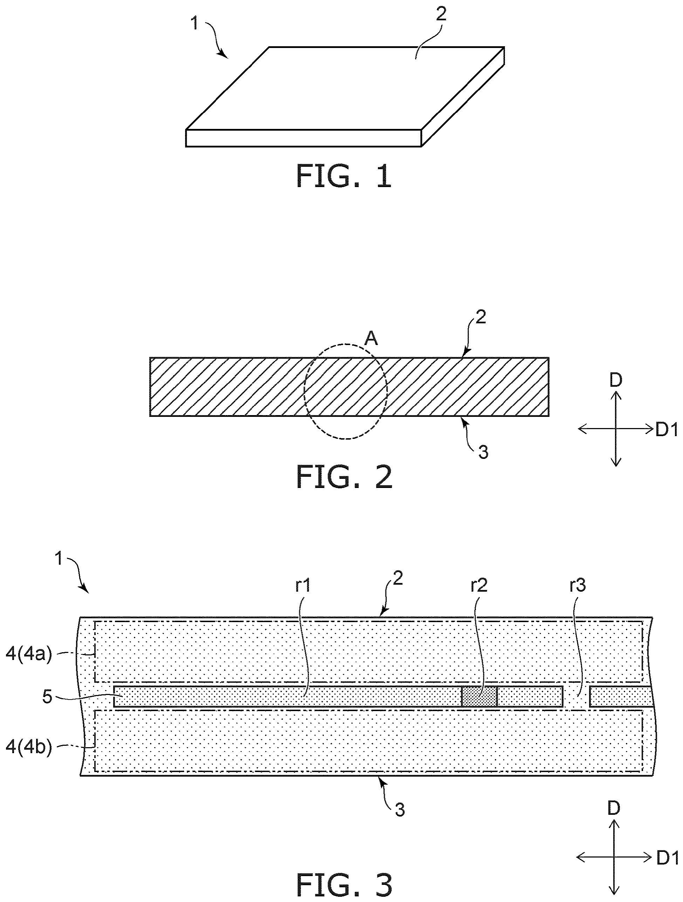

FIG. 1 is a perspective view showing an example of a silicon nitride substrate according to an embodiment.
[FIG. 2]
FIG. 2 is a cross-sectional view showing an example of the silicon nitride substrate according to the embodiment.
[FIG. 3]
FIG. 3 is an enlarged view of a cross section showing an example of the silicon nitride substrate according to the embodiment.
[FIG. 4]

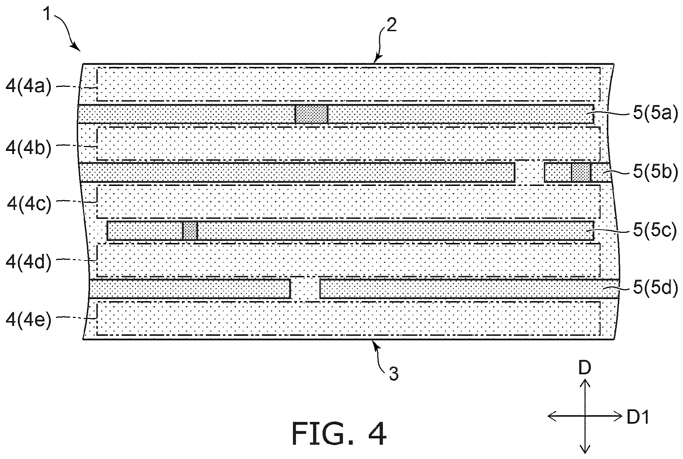

FIG. 4 is an enlarged view of a cross section showing an example of the silicon nitride substrate according to the embodiment.
[FIG. 5]

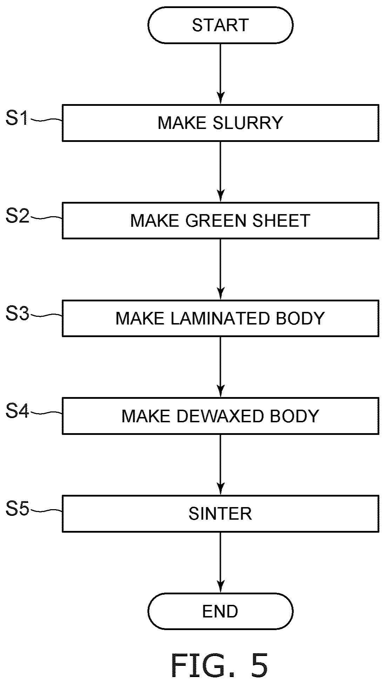

FIG. 5 is a flowchart showing a method for producing a silicon nitride substrate 1 according to an embodiment.
[FIG. 6]

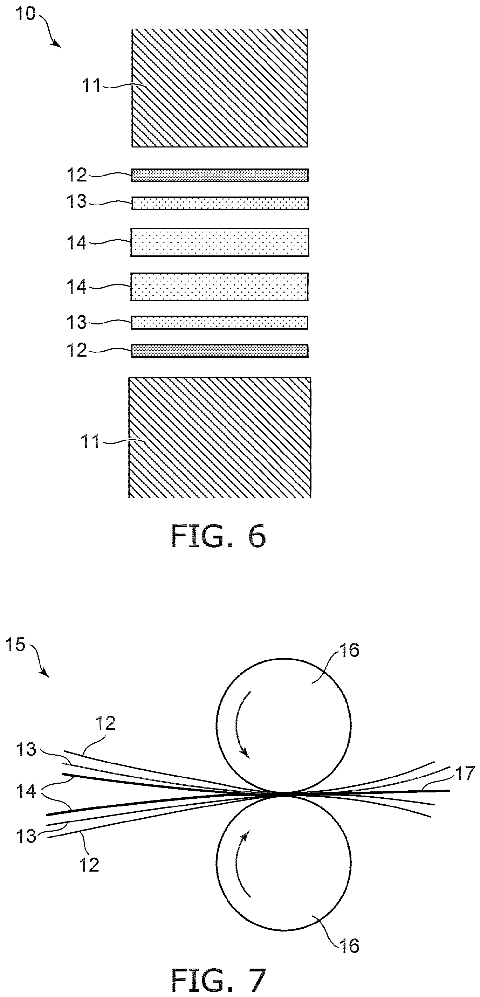

FIG. 6 is a cross-sectional view showing an example of green sheet lamination of a silicon nitride substrate according to an embodiment.
[FIG. 7]
FIG. 7 is a cross-sectional view showing an example of green sheet lamination of the silicon nitride substrate according to the embodiment.

[Description of Embodiments]

A silicon nitride substrate according to an embodiment includes a major layer and an intermediate layer as observed in dark-field with an optical microscope in a cross section of the silicon nitride substrate along a thickness direction, in which the intermediate layer is darker than the major layer. A color difference between the major layer and the intermediate layer is not less than 0.1. $m+1$ of the major layers and $m$ of the intermediate layers are alternately arranged in the thickness direction. A color difference between an nth major layer and an *nth* intermediate layer from one surface of the silicon nitride substrate ($n$ being an integer) is taken as *CDna*. A color difference between a ($n$+1)th major layer and the nth intermediate layer is taken as *CDnb*. In such a case, a first condition and a second condition are satisfied for all values of $n$ from 1 to m. The first condition is when there is a continuous region having a length of not less than 100 $\mu$m in a first direction in which $0.1 \le CDna \le 1.4$; and the first direction is parallel to the cross section and perpendicular to the thickness direction. The second condition is when there is a continuous region having a length of not less than 100 $\mu$m in the first direction in which $0.1 \le CDnb \le 1.4$.

FIG. 1 is a perspective view showing an example of a silicon nitride substrate according to an embodiment. FIG. 2 is a cross-sectional view showing an example of the silicon nitride substrate according to the embodiment.

In FIGS. 1 and 2, 1 is a silicon nitride substrate, and 2 is a first surface (a front surface, an upper surface). In FIG. 2, 3 is a second surface (a back surface, a lower surface) at the side opposite to the first surface 2. In the silicon nitride substrate according to the embodiment, the first surface 2 and the second surface 3 are substantially parallel. In the illustrated example, the shape of the first surface 2 when viewed in plan is square. The shape of the first surface 2 when viewed in plan may be a rectangle or other polygon, a circle, etc. Also, a hole that extends through the silicon nitride substrate 1 from the first surface 2 to the second surface 3 may be formed.

FIG. 3 is an enlarged view showing an example of portion A of FIG. 2.

FIG. 3 schematically shows the cross section of the silicon nitride substrate 1 along a thickness direction D as observed in dark-field with an optical microscope. As shown in FIG. 3, the silicon nitride substrate 1 includes a major layer 4 and an intermediate layer 5. The intermediate layer 5 is darker than the major layer 4. Specifically, in dark-field, the color difference between the major layer 4 and the intermediate layer 5 is not less than 0.1. In the silicon nitride substrate 1, $m+1$

major layers 4 and m intermediate layers 5 are alternately arranged in the thickness direction D. "*m*" is an integer not less than 1. In the illustrated example, *m* is "1". In other words, the silicon nitride substrate 1 includes two major layers 4; and one intermediate layer 5 is positioned between the major layers 4.

Herein, the color difference between the nth major layer 4 and the *n*th intermediate layer 5 from the first surface 2 (*n* being an integer) is taken as *CDna*. The color difference between the (*n*+1)th major layer 4 and the nth intermediate layer 5 is taken as *CDnb*. In such a case, a first condition and a second condition are satisfied for all values of *n* from 1 to m. The first condition is when there is a continuous region having a length of not less than 100 $\mu$m in a first direction D1 in which $0.1 \leq CDna \leq 1.4$; and the first direction D1 is parallel to the cross section and perpendicular to the thickness direction D. The second condition is when there is a continuous region having a length of not less than 100 $\mu$m in the first direction D1 in which $0.1 \leq CDnb \leq 1.4$.

For example, the color difference between a first major layer 4a and a first intermediate layer 5 from the first surface 2 is taken as *CD1a*. The color difference between a second major layer 4b and the first intermediate layer 5 is taken as *CD1b*. In the first major layer 4a and the first intermediate layer 5 of the silicon nitride substrate 1, there is a continuous region having a length of not less than 100 $\mu$m in the first direction D1 in which $0.1 \leq CD1a \leq 1.4$. Also, in the second major layer 4b and the first intermediate layer 5, there is a continuous region having a length of not less than 100 $\mu$m in the first direction D1 in which $0.1 \leq CDnb \leq 1.4$.

The measurement area of the color difference is set to "the thickness of the silicon nitride substrate 1"$\times$"1 mm". Measurement areas are set in the cross section of the silicon nitride substrate 1 at five random locations. It is favorable for the measurement areas to be set at positions that are sufficiently separated from each other. According to the embodiment, the color difference CDna satisfies the first condition and the color difference CDnb satisfies the second condition at each of the five locations.

As shown in FIG. 3, a region r1, a region r2, and a region r3 may be present between the major layers 4 adjacent to each other in the thickness direction D. The color differences between the region r1 and the adjacent major layers 4 are not less than 0.1 and not more than 1.4. The color differences between the region r2 and the adjacent major layers 4 are greater than 1.4. The color differences between the region r3 and the adjacent major layers 4 are less than 0.1. The regions r1 and r2 are identified as the intermediate layer 5 based on the color difference relationships between the major layers 4 and the regions r1 and r2. In the silicon nitride substrate 1 according to the embodiment, there is a continuous region r1 having a length of not less than 100 $\mu$m in the first direction D1.

The "color difference" is a metric defined using the colors of two objects. The two objects are discriminated more easily as the color difference between the objects increases. The objects become difficult to discriminate as the color difference decreases. The calculation method of the color difference is defined in JIS Z 8730 (2002). JIS Z 8730 (2002) corresponds to ISO 7724-3. In the calculation method specified in ISO 7724-3, the color difference $\Delta E^{*}_{ab}$ according to the L*a*b colorimetric system is calculated by the following formulas.

$$\Delta E^{*}_{ab} = [(\Delta L^{*})^{2} + (\Delta a^{*})^{2} + (\Delta b^{*})^{2}]^{1/2}$$

*$\Delta L^{*}$*: CIE lightness L* difference of two object-colors in L*a*b colorimetric system

*$\Delta a^{*}$*: Color coordinate a* difference of two objects in L*a*b colorimetric system

*$\Delta b^{*}$*: Color coordinate b* difference of two objects in L*a*b colorimetric system

Other than the calculation method specified in ISO 7724-3, the color difference also can be calculated using the lightness, chroma, and hue components. The maximum difference between the color differences due to calculation methods is about 0.1%. Therefore, the calculated color difference is substantially the same for any method.

It is difficult to directly measure the color difference in the cross section of the silicon nitride substrate 1 with a measuring instrument. This is because the size of the measurement part of the device is larger than the area to be measured. If the size of the measurement part is larger than the area to be measured, colors around the area to be measured also are measured. As a result, it is difficult to measure an accurate color difference. Therefore, a photograph of the cross section is used when measuring the color difference in the cross section of the silicon nitride substrate 1. The cross section is imaged in dark-field. The industrial microscope STM7 made by Olympus Corporation can be used as the imaging device of the cross section. Automatically set conditions may be used in the imaging. The area in which the color difference is measured is made larger than the size of the measurement part by enlarging the dark-field image. The enlarged image is used to measure the color difference in each location of the cross section. The measurement device can be selected as appropriate as long as the color difference can be measured in a small location. For example, the spectrocolorimeter CM-2600d by Konica Minolta, Inc. or its successor, CM-26d, can be used as the measurement device.

$\Delta L^*$, $\Delta a^*$, and $\Delta b^*$ between two objects can be measured with these spectrocolorimeters. The color difference $\Delta E^*_{ab}$ is calculated by rounding to the nearest second decimal place of the measured value. The color difference in accordance with ISO 7724-3 is measured by the spectrocolorimeter CM-2600d or CM-26d.

It is favorable for the cross section of the silicon nitride substrate 1 to pass through the center of the silicon nitride substrate 1 in an in-plane direction. The in-plane direction is a direction perpendicular to the thickness direction D. When, for example, the silicon nitride substrate 1 is rectangular, the silicon nitride substrate 1 is cut along the center line in the long-side direction or the center line in the short-side direction. When the silicon nitride substrate 1 is circular, the silicon nitride substrate 1 is cut along a line passing through the center of the circle.

The major layer 4 and the intermediate layer 5 are identified in the cross section by the following procedure. First, the major layer 4 is present at the first surface 2 vicinity or the second surface 3 vicinity of the silicon nitride substrate 1. In the cross section, a relatively white region proximate to the first surface 2 is identified as the major layer 4. Then, the color difference between the major layer 4 and the region below the major layer 4 is measured. It is favorable to enlarge the photograph of the cross section so that the measurement area of the color difference is not more than 1.0 mm. The photograph may be enlarged more according to the thickness of the major layer 4. As a result of the color difference measurement, a region that is darker than the major layer 4 to the naked eye and has a color difference of not less than 0.1 with the major layer 4 is identified as the intermediate layer 5. Subsequently, the color difference between the intermediate layer 5 and the region below the intermediate layer 5 is measured. As a result of the color difference measurement, a region that is brighter than the intermediate layer 5 to the naked eye and has a color difference of not less than 0.1 with the intermediate layer 5 is identified as the major layer 4. When the silicon nitride substrate 1 includes three or more major layers 4 and two or more intermediate layers 5, the major layers 4 and the intermediate layers 5 are identified by repeating a similar procedure.

FIG. 4 is an enlarged view showing another example of portion A of FIG. 2.

FIG. 3 shows an example in which the silicon nitride substrate 1 includes two major layers 4. As shown in FIG. 4, the silicon nitride substrate 1 according to the embodiment may include three or more major layers 4. In the example shown in FIG. 4, the silicon nitride substrate 1 includes five major layers 4a to 4e and four intermediate layers 5a to 5d in the cross section. In other words, m is "4". In such a case, the first condition is satisfied for each of the color differences CD1a to CD4a; and the second condition is satisfied for each of the color differences CD1b to CD4b.

If the color difference CDna or the color difference CDnb is greater than 1.4, the adhesion between the major layers 4 may be insufficient. Insufficient adhesion causes pores (pores) to occur between the major layers 4. For example, even when pores are not observed in the cross section, there is a possibility that pores (pores) may occur in regions other than the cross section. If a large pore occurs, separation between the green sheets called delamination occurs partially or over the entirety. If delamination occurs, the delaminated portion becomes a starting point; and damage proceeds easily. As a result, the bending strength (the mechanical properties) of the silicon nitride substrate 1 is reduced. Also, the conduction of heat is obstructed at the delaminated portion. Therefore, the thermal conductivity (the heat dissipation characteristics) of the silicon nitride substrate 1 are reduced.

The silicon nitride substrate 1 is produced by laminating and sintering multiple silicon nitride green sheets. For example, the green sheet is produced by sheet forming. In sheet forming, a liquid silicon nitride raw material is continuously coated onto a sheet film and dried. In such a case, thickness fluctuation and a gradual unevenness occurs in the surface of the green sheet. Also, when the sheet forming is performed in ambient air, the surface of the green sheet has less solvent and is in a drier state than the interior of the green sheet. The unevenness and the dryness degrade the adhesion between the green sheets. It is therefore favorable to apply sufficient pressure to the multiple green sheets when laminating the green sheets.

A slight space is present between the laminated green sheets. The space is interspersed between the green sheets; and air is present in the space. The laminated green sheets are sintered in a nitrogen atmosphere. If the green sheets are sintered with air interspersed, the oxygen contained in the air reacts with the green sheet. Locally, sintering in an oxidation atmosphere occurs. The locations that are sintered in an oxidation atmosphere are colored. The colors of the locations sintered in an oxidation atmosphere are slightly darker than the colors of the locations sintered in a nitrogen atmosphere. As a result, the locations in the cross section that are sintered in a nitrogen atmosphere are observed as the relatively bright major layers 4. The locations that are colored by reacting with oxygen are observed as the relatively dark intermediate layers 5. In other words, the region that is distant to the surface of the green sheet in the state before sintering corresponds to the major layer 4 after sintering. The region positioned at the surface vicinity of the green sheet in the state before sintering corresponds to the intermediate layer 5 after sintering.

As described above, if the color difference is large and defects due to pores or delamination occur, the thermal conduction is reduced at the defect locations. As a result, the heat dissipation of the silicon nitride substrate is degraded. The silicon nitride substrate is used in a silicon nitride circuit board that includes a metal circuit, a semiconductor module in which a semiconductor element is mounted to the surface of a metal circuit, etc. If the heat dissipation of the silicon nitride substrate is degraded, the heat dissipation of the silicon nitride circuit board or semiconductor module is degraded. If the semiconductor element is operated with the heat dissipation in a degraded state, the semiconductor element may be damaged by the generated heat. Also, if the color difference is large and defects due to pores or delamination occur, the strength of the silicon nitride substrate may be reduced. If the strength of the silicon nitride substrate is reduced, there is a possibility that delamination inside the silicon nitride substrate may occur due to thermal cycles, etc. For example, there is a possibility that the upper surface part of the silicon nitride substrate and the metal circuit bonded to the upper surface part may delaminate from the other parts of the silicon nitride substrate.

According to the silicon nitride substrate 1 according to the embodiment, the first condition and the second condition are satisfied. The first condition is when there is a continuous region having a length of not less than 100 $\mu$m in the first direction D1 in which $0.1 \leq CDna \leq 1.4$. The second condition is when there is a continuous region having a length of not less than 100 $\mu$m in the first direction D1 in which $0.1 \leq CDnb \leq 1.4$. The presence of a color difference between the major layer 4 and the intermediate layer 5 means that there is a location discolored by oxidization in the intermediate layer 5. As the degree of oxidization increases, the region is more intensely discolored, and the color difference increases. The color difference being not less than 0.1 and not more than 1.4 means that the discoloration of the intermediate layer 5 is suppressed, and the oxidization of the intermediate layer 5 is suppressed. Oxidization of the intermediate layer 5 may cause the occurrence of pores or delamination. The state in which the first condition and the second condition are satisfied is a state in which the occurrence of pores or delamination is suppressed.

For example, if the first condition and the second condition are not satisfied, the length of the region in which the color difference is not more than 1.4 is less than 100 $\mu$m. In other words, wider regions having large color differences mean that oxidized regions are wider. This means that the adhesion between the green sheets is insufficient, and pores or delamination defects occur easily.

Also, according to the embodiment, when the silicon nitride substrate 1 includes m+1 major layers 4 and m intermediate layers 5, the first condition and the second condition are satisfied in each range of $1 \leq n \leq$ m. In other words, oxidization is suppressed in each intermediate layer 5 present in the silicon nitride substrate 1. The occurrence of pores or delamination is more reliably suppressed thereby. The reduction of the mechanical strength and the reduction of the heat dissipation due to the occurrence of pores or delamination can be suppressed.

It is most desirable for the color difference to be zero. However, to realize a state in which the color difference is zero, it is necessary to closely adhere the green sheets to each other with a large pressure for a long time. The suitability for mass production of the silicon nitride substrate 1 is reduced, and the production cost is increased. Accordingly, a color difference may occur between the major layer 4 and the intermediate layer 5 in a manufacturing process for mass-produced parts.

A smaller color difference between the major layer 4 and the intermediate layer 5 means that the degree of oxidization in the intermediate layer 5 is less. Therefore, more favorably, there is a continuous region having a length of not less than 100 $\mu$m in the first direction D1 in which $0.1 \leq CDna \leq 1.2$, and a continuous region having a length of not less than 100 $\mu$m in the first direction D1 in which $0.1 \leq CDnb \leq 1.2$. Most favorably, there is a continuous region having a length of not less than 100 $\mu$m in the first direction D1 in which $0.1 \leq CDna \leq 1.0$, and a continuous region having a length of not less than 100 $\mu$m in the first direction D1 in which $0.1 \leq CDnb \leq 1.0$.

Also, a wider region in which the color difference is not less than 0.1 and not more than 1.4 indicates that the adhesion between the green sheets is better. Therefore, more favorably, there is a continuous region having a length of not less than 200 $\mu$m in the first direction D1 in which $0.1 \leq CDna \leq 1.4$, and a continuous region having a length of not less than 200 $\mu$m in the first direction D1 in which $0.1 \leq CDnb \leq 1.4$. Most favorably, there is a continuous region having a length of not less than 400 $\mu$m in the first direction D1 in which $0.1 \leq CDna \leq 1.4$, and a continuous region having a length of not less than 400 $\mu$m in the first direction D1 in which $0.1 \leq CDnb \leq 1.4$.

The number of the major layers 4 is not particularly limited. However. The number of the intermediate layers 5 also increases as the number of the major layers 4 increases. In other words, the ratio of oxidized regions in the silicon nitride substrate 1 increases. As a result, there may be a possibility of a reduction of the thermal conductivity or a reduction of the mechanical strength of the silicon nitride substrate 1. It is therefore favorable for the number of the major layers 4 to be not less than 2 and not more than 5.

It is favorable for the thermal conductivity of the silicon nitride substrate 1 to be not less than 50 W/(m·K). According to the embodiment, the thermal conductivity of the silicon nitride substrate 1 can be increased because pores or delamination defects are suppressed. It is more favorable for the thermal conductivity of the silicon nitride substrate 1 to be a thermal conductivity of not less than 60 W/(m·K). The thermal conductivity is measured by a laser flash method.

It is favorable for the three-point bending strength of the silicon nitride substrate 1 to be not less than 600 MPa. According to the embodiment, the three-point bending strength of the silicon nitride substrate 1 can be increased because pores or delamination defects are suppressed. It is favorable for the three-point bending strength of the silicon nitride substrate 1 to be not less than 650 MPa. The three-point bending strength is measured in accordance with ISO 23242 (2020).

FIG. 5 is a flowchart showing a method for producing the silicon nitride substrate 1 according to an embodiment.

The method for producing the silicon nitride substrate 1 according to the embodiment will now be described. As shown in FIG. 5, the silicon nitride substrate production method according to the embodiment mainly includes making a slurry (step S1), making a green sheet (step S2), making a laminated body (step S3), making a dewaxed body (step S4), and sintering (step S5).

The making of the slurry includes mixing an organic solvent and a binder with a silicon nitride powder and a sintering aid powder. The making of the green sheet includes forming the slurry. The making of the laminated body includes overlaying the multiple green sheets at a temperature of not less than 60 °C under a pressure of not less than 0.1 MPa. The making of the dewaxed body includes heat-treating the laminated body at a temperature of not more than 1,000 °C. The sintering includes heat-treating the dewaxed body at a temperature of not less than 1,600 °C and not more than 2,000 °C. The processes will now be described more specifically.

First, a slurry is made by mixing an organic solvent and a binder with a silicon nitride powder and a sintering aid powder. It is favorable for the alpha percentage of the silicon nitride powder to be not less than 80 mass%. It is favorable for the average particle size to be not less than 0.4 $\mu$m and not more than 2.5 $\mu$m. It is favorable for the impurity oxygen content to be not more than 2 mass%. It is favorable for the impurity oxygen content to be not more than 1.0 mass%, and more favorably not less than 0.1 mass% and not more than 0.8 mass%. If the impurity oxygen content is greater than 2 mass%, there is a possibility that the thermal conductivity may be reduced for the silicon nitride substrate 1 that is produced.

It is favorable for the sintering aid powder to be a metal oxide powder having an average particle size of not less than 0.5 $\mu$m and not more than 3.0 $\mu$m. An oxide of an element selected from a rare-earth element, magnesium, titanium, and hafnium may be used as the metal oxide powder. A liquid phase component is easily formed in the sintering process by adding a metal oxide sintering aid. For example, one or more selected from a rare-earth element, magnesium, titanium, and hafnium is added as the sintering aid with a total of not less than 1 mass% and not more than 20 mass% when converted to its oxide. More favorably, the sintering aid is added with a total within the range of not less than 1 mass% and not more than 20 mass% when converted to its oxide. In particular, it is favorable to add two or more oxides. By adding two or more oxides, two or more glass compound phases having different compositions are easily formed. More favorably, it is favorable to add an oxide of a rare-earth element as an essential component, and to add an oxide of one or more elements selected from magnesium, hafnium, and titanium.

The silicon nitride powder and the sintering aid powder are pulverized and mixed in the organic solvent. The organic solvent is toluene, ethanol, butanol, etc. Then, the binder is added to make the slurry. The binder includes butyl methacrylate, polyvinyl butyral, polymethyl methacrylate, etc.

Then, a green sheet is made by forming the raw material slurry. The sheet forming can include a known method such as a doctor blade technique, extrusion molding, etc. In particular, it is favorable to use the doctor blade technique as the sheet forming. The doctor blade technique can make a large and thin green sheet; and the suitability for mass production is improved.

Then, the multiple green sheets are overlaid and sandwiched between clean paper. A pressure of not less than 0.1 MPa is applied to the multiple green sheets via the clean paper at a temperature of not less than 60 °C. As a result, the multiple green sheets are closely adhered to each other; and a laminated body is made.

FIG. 6 is a cross-sectional view showing an example of a method for making a laminated body. FIG. 6 shows flat press lamination 10 in which the laminated body is made with a flat press. In the flat press lamination 10, a pair of resin sheets 12, a pair of sheets of clean paper 13, and multiple silicon nitride green sheets 14 are disposed between a pair of flat presses 11. The flat presses 11 include heaters. The pair of sheets of clean paper 13 and the multiple green sheets 14 are disposed between the resin sheets 12. The multiple green sheets 14 are disposed between the clean paper 13.

When the flat presses 11 are used, the green sheet 14 is cut to a prescribed size before making the laminated body. After cutting, a prescribed number of green sheets 14 are overlaid. The resin sheet 12 is used to increase the releasability between the flat press 11 and the clean paper 13 after lamination. The resin sheet 12 includes a resin material such as polyethylene (PE), polyethylene terephthalate (PET), polyvinyl chloride, etc.

The clean paper 13 is low-dust paper generally used in cleanrooms. The clean paper 13 is made using long fibers without using short fibers. Dust generation is prevented by the long fibers bonding to each other. By using the clean paper 13, fibers can be prevented from to the green sheet. The clean paper 13 that uses electrically-conductive fibers may be used. By using the electrically-conductive clean paper 13, the generation of static electricity can be suppressed. As a result, dust can be prevented from being attracted to the clean paper 13 by static electricity.

The clean paper 13 has the strength and flexibility of ordinary paper. If the laminated green sheets 14 are directly pressed by the flat presses 11 from both sides, a bias may occur in the pressure. The clean paper 13 deforms along the unevenness of the surface of the green sheet 14. The laminated green sheets 14 are disposed between a pair of sheets of clean paper 13. By pressing the green sheets 14 via the clean paper 13, the pressure is dispersed by the clean paper 13. As a result, the pressure can be applied more uniformly over the entire surface of the green sheet 14. For example, according to the state of the flat press 11, the central portion and end portion of the green sheet 14 may not be pressed uniformly, which may cause delamination. By using the clean paper 13, the pressure can be applied uniformly to the green sheet 14; and the occurrence of delamination can be suppressed.

The thickness of the clean paper 13 is about 0.08 to 0.15 mm. When the clean paper 13 is thin, the deformation when pressing is small. The pressure tends to be applied more directly to the green sheet 14. Therefore, thin clean paper 13 is suited when the green sheet 14 has low surface unevenness. When the clean paper 13 is thick, the deformation when pressing is large. The pressure tends to be applied in a more dispersed manner to the green sheet 14. Therefore, a thick clean paper 13 is suited when the green sheet 14 has high surface unevenness.

FIG. 7 is a cross-sectional view showing another example of a method for making the laminated body. FIG. 7 shows double-sided roll lamination 15 that makes a roller-laminated body. In the double-sided roll lamination 15, a pair of rollers 16 that includes heaters is used. The multiple silicon nitride green sheets 14 are disposed between the rollers 16 with the clean paper 13 interposed. The resin sheet 12 is disposed between the roller 16 and the clean paper 13 as necessary. By including the resin sheet 12, the roller 16 and the clean paper 13 are easier to separate.

The resin sheets 12, the clean paper 13, and the multiple green sheets 14 are continuously supplied between the pair of rollers 16. Therefore, the resin sheet 12 and the clean paper 13 that correspond to the length of the green sheet 14 are prepared beforehand. A laminated body 17 in which the multiple green sheets 14 are laminated is discharged from between the pair of rollers 16. In double-sided rolls, the length of the green sheet 14 in the movement direction is not limited. Therefore, methods that use the rollers 16 have excellent suitability for mass production. When the width of the roller 16 is less than the width of the green sheet, the green sheet is cut to a prescribed width.

The multiple green sheets 14 are partially pressed while extruded by the rollers 16. Therefore, methods that use the rollers 16 have excellent pressing uniformity compared to methods that use the flat presses 11. Also, even in methods that use the rollers 16, depending on the state of the rollers 16, there is a possibility that a pressure difference may occur between the central portion and the end portion of the roller. Therefore, similarly to methods that use the flat presses 11, it is favorable to use the clean paper 13. By sandwiching the clean paper 13 between the green sheet 14 and the roller 16, the clean paper 13 deforms according to the surface unevenness of the green sheet 14 or the state of the roller 16. By using the clean paper 13, the pressure can be applied uniformly to the green sheet 14; and the occurrence of delamination can be suppressed.

It is favorable to set the temperature when making the laminated body to be not less than 60 °C. The "temperature" is the temperature of the flat presses 11 above and below or the temperature of the rollers 16 above and below. The green sheets 14 are bonded to each other by heating. The green sheets 14 are favorably closely adhered to each other by further applying pressure. When the temperature is less than 60 °C, bonding by heating is insufficient. Air tends to remain between the green sheets 14 in the laminated body that is made. As a result, the green sheet 14 is oxidized by the air; and the color difference between the major layer 4 and the intermediate layer 5 becomes large. In other words, defects such as pores, delamination, etc., occur easily. The green sheets 14 can be bonded to each other more quickly as the temperature increases. When the green sheet 14 is thick or the number of the green sheets 14 to be laminated is high, heat is not easily conducted to the interior, and so it is favorable to heat at a higher temperature. On the other hand, if the temperature is too high, the surface of the green sheet 14 tends to be dry. It is therefore favorable for the temperature to be not more than 140 °C.

It is favorable for the pressure when making the laminated body to be not less than 0.1 MPa. The "pressure" is the pressure applied by the flat presses 11 above and below or the pressure applied by the rollers 16 above and below. If the pressure is less than 0.1 MPa, the green sheets 14 are insufficiently bonded to each other; and defects such as pores, delamination, etc., occur easily. When the pressure is high, the bonding is possible in a short period of time. On the other hand, if the pressure is too high, there is a possibility that damage of the green sheet 14 may occur in the thickness direction. It is therefore favorable for the pressure to be not more than 0.5 MPa.

Then, a dewaxed body is made by dewaxing the laminated body at a temperature of not more than 1,000 °C. It is favorable for the atmosphere of the dewaxing process to be an inert atmosphere such as nitrogen gas, argon gas, etc. The atmosphere may be set to an oxygen-including atmosphere by adding oxygen to an inert atmosphere. It is favorable for the dewaxing temperature to be not more than 1,000 °C, and more favorably within the range of not less than 500 °C and not more than 800 °C. By performing the dewaxing process in this temperature range, the pyrolysis rate of the binder can be controlled. By releasing pyrolysis gas in the dewaxing, damage of the dewaxed body can be prevented. If the dewaxing temperature is greater than 1,000 °C, the polymer binder burns off quickly, and the dewaxed body is easily damaged. On the other hand, if the dewaxing temperature is less than 500 °C, there is a possibility that the pyrolysis of the binder may be insufficient, and the sintered body can no longer be densified. It is therefore favorable to cause pyrolysis of the binder and other organic materials at a temperature of not more than 1,000 °C, and more favorably not less than 500 °C and not more than 800 °C.

Continuing, the dewaxed body is sintered at a temperature of not less than 1,600 °C and not more than 2,000 °C. It is favorable for the pressure inside the sintering furnace to be a pressurized atmosphere. Densification of the sintered body is insufficient when the sintering temperature is less than 1,600 °C. If the sintering temperature is greater than 2,000 °C and the atmosphere pressure inside the furnace is low, there is a possibility that the silicon nitride included in the sintered body may decompose into silicon (Si) and nitrogen (N). It is therefore favorable for the sintering temperature to be within the range of not less than 1,700 °C and not more than 1,900 °C. In this temperature range, multiple glass compounds having different compositions are generated by the sintering aid and the impurity oxygen. As a result, liquid-phase sintering of silicon nitride proceeds easily.

# EP 4 711 349 A1

(Examples 1 to 8 and Comparative Examples 1 to 8)

A silicon nitride powder having an alpha percentage of 95% and an average particle size of 0.8 µm was prepared. Oxides of rare-earth elements, oxides of titanium, oxides of hafnium, and oxides of magnesium were prepared as sintering aids. The sintering aid was mixed with the silicon nitride powder in 10 mass% when converted to its oxide relative to the silicon nitride powder. A slurry was made by mixing an organic solvent and a binder with the silicon nitride powder and the sintering aid. The slurry that was made was formed by a sheet forming machine to make a large silicon nitride green sheet. The large green sheet was cut with a cutter so that the size of one green sheet was 200 mm×200 mm. Multiple cut green sheets were overlaid. The multiple green sheets were sandwiched between polyethylene terephthalate sheets and pressed while heating by a flat press or double-sided rolls. As a result, the multiple green sheets were bonded, and a laminated body was made.

Table 1 lists the conditions for making the laminated bodies. In Table 1, "substrate thickness" was the final thickness of the silicon nitride substrate after sintering. "Number of layers" was the number of overlaid green sheets. In Examples 1 to 8, clean paper was disposed at each of the upper surface and lower surface of the laminated green sheets. The thickness of the clean paper was 1 mm. Clean paper was not included in Comparative Examples 1 to 8. "Lamination method" indicates the method of making the laminated body. "Flat" refers to a method that uses the flat press shown in FIG. 6. "Roll" refers to a method that uses the roller shown in FIG. 7. "Temperature" was the temperature of the flat press or roller when making the laminated body. "Pressure" was the pressure applied to the green sheet from the flat press or roller.

[Table 1]

|  | Substrate thickness | Number of layers | Clean paper | Lamination method | Temperature (°C) | Pressure (MPa) |
|---|---|---|---|---|---|---|
| Example 1 | 0.64 | 2 | Yes | Flat | 80 | 0.3 |
| Example 2 | 0.64 | 2 | Yes | Flat | 60 | 0.3 |
| Example 3 | 0.64 | 2 | Yes | Flat | 80 | 0.1 |
| Example 4 | 0.96 | 3 | Yes | Flat | 80 | 0.3 |
| Example 5 | 1.28 | 4 | Yes | Flat | 80 | 0.3 |
| Example 6 | 1.60 | 5 | Yes | Flat | 80 | 0.3 |
| Example 7 | 0.64 | 2 | Yes | Roll | 80 | 0.3 |
| Example 8 | 1.60 | 5 | Yes | Roll | 80 | 0.3 |
| Comparative Example 1 | 0.64 | 2 | No | Flat | 20 | 0.3 |
| Comparative Example 2 | 0.64 | 2 | No | Flat | 60 | 0.0 |
| Comparative Example 3 | 0.96 | 3 | No | Flat | 30 | 0.1 |
| Comparative Example 4 | 1.28 | 4 | No | Flat | 40 | 0.3 |
| Comparative Example 5 | 1.60 | 5 | No | Flat | 50 | 0.3 |
| Comparative Example 6 | 1.92 | 6 | No | Flat | 60 | 0.3 |
| Comparative Example 7 | 0.64 | 2 | No | Roll | 20 | 0.3 |
| Comparative Example 8 | 1.92 | 6 | No | Roll | 80 | 0.3 |

Then, the laminated body was dewaxed in a nitrogen atmosphere at a temperature of not less than 500 °C and not more than 800 °C. The dewaxed body was then sintered in a nitrogen pressurized atmosphere at a temperature of not less than 1,600 °C and not more than 2,000 °C. The sintered body thus obtained was cut in the thickness direction to pass through the central portion when viewed in plan. The cross section was observed in dark-field using an industrial microscope STM7 made by Olympus Corporation; and an enlarged photograph was imaged. Then, the major layers and the intermediate layers in the cross section were identified using a spectrocolorimeter (CM-2600d made by Konica Minolta, Inc.). The color differences between the major layers and the intermediate layers were sequentially measured along the first direction D1. The measurement area in the first direction D1 was set to "the thickness of the ceramic substrate"×"1 mm". Measurement areas were selected at five locations separated from each other by 1 mm. From the measurement results of the color difference, the length of the continuous region in the first direction D1 was measured for each color difference. In each example, the smallest color difference was extracted from the color differences of the regions continuous for not less than 100 $\mu$m. Table 2 lists the measurement results. For example, in each measurement area of Example 1, there was a continuous region having a length of not less than 100 $\mu$m in the first direction D1 in which the color difference CD1a was 1.1. This indicates that in at least one measurement area, the length of a region in which the color difference CD1a was 1.0 was less than 100 $\mu$m.

[Table 2]

| | CD1a | CD1b | CD2a | CD2b | CD3a | CD3b | CD4a | CD4b | CD5a | CD5b |
|---|---|---|---|---|---|---|---|---|---|---|
| **Example 1** | 1.1 | 1.1 | - | - | - | - | - | - | - | - |
| **Example 2** | 1.0 | 1.1 | - | - | - | - | - | - | - | - |
| **Example 3** | 1.0 | 1.0 | - | - | - | - | - | - | - | - |
| **Example 4** | 1.0 | 1.1 | 1.0 | 1.1 | - | - | - | - | - | - |
| **Example 5** | 1.0 | 1.1 | 1.0 | 1.1 | 1.0 | 1.1 | - | - | - | - |
| **Example 6** | 1.0 | 1.1 | 1.3 | 1.4 | 1.4 | 1.2 | 1.0 | 1.1 | - | - |
| **Example 7** | 0.8 | 1.1 | - | - | - | - | - | - | - | - |
| **Example 8** | 1.0 | 1.1 | 1.2 | 1.3 | 1.3 | 1.3 | 1.0 | 1.1 | - | - |
| **Comparative Example 1** | 1.6 | 1.5 | - | - | - | - | - | - | - | - |
| **Comparative Example 2** | 1.7 | 1.7 | - | - | - | - | - | - | - | - |
| **Comparative Example 3** | 1.4 | 1.6 | 1.6 | 1.4 | - | - | - | - | - | - |
| **Comparative Example 4** | 1.0 | 1.1 | 1.6 | 1.5 | 1.0 | 1.1 | - | - | - | - |
| **Comparative Example 5** | 1.0 | 1.1 | 1.5 | 1.4 | 1.5 | 1.5 | 1.0 | 1.1 | - | - |
| **Comparative Example 6** | 1.0 | 1.1 | 1.3 | 1.2 | 1.5 | 1.6 | 1.4 | 1.3 | 1.0 | 1.1 |
| **Comparative Example 7** | 1.5 | 1.6 | - | - | - | - | - | - | - | - |
| **Comparative Example 8** | 1.0 | 1.0 | 1.2 | 1.2 | 1.6 | 1.6 | 1.4 | 1.4 | 1.0 | 1.0 |

It can be seen from Table 2 that it was confirmed for the silicon nitride substrates according to the Examples that the color difference CDna and the color difference CDnb satisfied the first condition and the second condition. This was because the lamination conditions of the green sheets were appropriate. In contrast, in the silicon nitride substrates of the Comparative Examples, there were wide regions with large color differences; and the first condition and the second condition were not satisfied. This was because the lamination conditions of the green sheets were inappropriate; and the adhesion of the green sheets was insufficient. As a result, the intermediate layers were discolored, and the measured color differences were large compared to the Examples.

Then, the silicon nitride substrates according to the Examples and the Comparative Examples were patterned into 40 mm$\times$20 mm to make test pieces. The bending strength was measured using the test pieces. The patterning of the test pieces was performed in accordance with JIS R 1607 (2015). The measurement of the bending strength was performed by three-point bending with a span of 30 mm in accordance with ISO 23242 (2020). Then, the silicon nitride substrates according to the Examples and the Comparative Examples were patterned with a diameter of 10 mm; and the thermal conductivity was measured. The measurement results of the bending strength and the thermal conductivity are shown in Table 3.

[Table 3]

|  | Bending strength (MPa) | Thermal conductivity (W/m·k) |
|---|---|---|
| Example 1 | 750 | 63 |
| Example 2 | 700 | 58 |
| Example 3 | 650 | 54 |
| Example 4 | 750 | 63 |
| Example 5 | 740 | 62 |
| Example 6 | 730 | 61 |
| Example 7 | 750 | 63 |
| Example 8 | 730 | 61 |
| Comparative Example 1 | 580 | 48 |
| Comparative Example 2 | 550 | 46 |
| Comparative Example 3 | 580 | 48 |
| Comparative Example 4 | 560 | 47 |
| Comparative Example 5 | 540 | 45 |
| Comparative Example 6 | 520 | 43 |
| Comparative Example 7 | 580 | 48 |
| Comparative Example 8 | 520 | 43 |

It can be seen from Table 3 that the bending strength and the thermal conductivity were in favorable ranges for the silicon nitride substrates according to the Examples. This was because the lamination conditions of the green sheets were appropriate, which suppressed the occurrence of pores and delamination between the layers. In contrast, the bending strength and the thermal conductivity were outside the favorable ranges for the silicon nitride substrates of the Comparative Examples. This was because the lamination of the green sheets was insufficient, and the occurrence of pores and/or delamination in the intermediate layers caused a reduction of the bending strength and/or a reduction of the thermal conductivity.

Embodiments of the invention include the following features.

Feature 1

A silicon nitride substrate, comprising:

a major layer and an intermediate layer as observed in dark-field with an optical microscope in a cross section of the silicon nitride substrate along a thickness direction of the silicon nitride substrate, the intermediate layer being darker than the major layer,
a color difference between the major layer and the intermediate layer being not less than 0.1,
$m+1$ of the major layers and $m$ of the intermediate layers being alternately arranged in the thickness direction,
a color difference between an $n$th major layer and an $n$th intermediate layer from one surface of the silicon nitride substrate and a color difference between a $(n+1)$th major layer and the nth intermediate layer from the one surface satisfying a first condition and a second condition for all values of $n$ from 1 to $m$, $n$ being an integer,
the first condition being when there is a continuous region having a length of not less than 100 $\mu$m in a first direction in which $0.1 \leq CDna \leq 1.4$, $CDna$ being the color difference between the nth major layer and the nth intermediate layer from the one surface, the first direction being parallel to the cross section and perpendicular to the thickness direction,
the second condition being when there is a continuous region having a length of not less than 100 $\mu$m in the first direction in which $0.1 \leq CDnb \leq 1.4$, $CDnb$ being the color difference between the $(n+1)$th major layer and the nth intermediate layer from the one surface.

Feature 2

The silicon nitride substrate according to Feature 1, wherein

a number of the major layers is not less than 2 and not more than 5.

Feature 3

The silicon nitride substrate according to Feature 1 or 2, wherein
a thickness of the silicon nitride substrate is not less than 0.3 mm and not more than 2.0 mm.

Feature 4

The silicon nitride substrate according to any one of Features 1 to 3, wherein
a bending strength of the silicon nitride substrate is not less than 600 MPa.

Feature 5

The silicon nitride substrate according to any one of Features 1 to 4, wherein
a thermal conductivity of the silicon nitride substrate is not less than 50 W/(m·K).

Feature 6

A silicon nitride substrate production method, comprising:

> making a slurry by mixing an organic solvent and a binder with a silicon nitride powder and a sintering aid powder;
> making a green sheet by forming the slurry;
> making a laminated body by overlaying a plurality of the green sheets at a temperature of not less than 60 °C under a pressure of not less than 0.1 MPa;
> making a dewaxed body by heat-treating the laminated body at a temperature of not more than 1,000 °C; and
> sintering the dewaxed body at a temperature of not less than 1,600 °C and not more than 2,000 °C.

Feature 7

The silicon nitride substrate production method according to Feature 6, wherein
the making of the laminated body includes overlaying the plurality of green sheets by using a pair of rollers.

Feature 8

The silicon nitride substrate production method according to Feature 6 or 7, wherein
the making of the laminated body includes disposing the plurality of green sheets between a pair of sheets of clean paper, and heating and pressing the plurality of green sheets via the pair of sheets of clean paper.

While certain embodiments of the inventions have been illustrated, these embodiments have been presented by way of example only, and are not intended to limit the scope of the inventions. These novel embodiments may be embodied in a variety of other forms; and various omissions, substitutions, modifications, etc., can be made without departing from the spirit of the inventions. These embodiments and their modifications are within the scope and spirit of the inventions, and are within the scope of the inventions described in the claims and their equivalents. Also, the embodiments above can be implemented in combination with each other.

[Reference Numeral List]

> 1 silicon nitride substrate
> 2 first surface
> 3 second surface
> 4, 4a to 4e major layer
> 5, 5a to 5d intermediate layer
> 10 flat press lamination
> 11 flat press
> 12 resin sheet
> 13 clean paper

14 green sheet
15 double-sided roll lamination
16 double-sided roll
17 green sheet laminated body

**Claims**

1. A silicon nitride substrate, comprising:

   a major layer and an intermediate layer as observed in dark-field with an optical microscope in a cross section of the silicon nitride substrate along a thickness direction of the silicon nitride substrate, the intermediate layer being darker than the major layer,
   a color difference between the major layer and the intermediate layer being not less than 0.1,
   $m+1$ of the major layers and m of the intermediate layers being alternately arranged in the thickness direction,
   a color difference between an $n$th major layer and an $n$th intermediate layer from one surface of the silicon nitride substrate and a color difference between a $(n+1)$th major layer and the nth intermediate layer from the one surface satisfying a first condition and a second condition for all values of $n$ from 1 to $m$, $n$ being an integer,
   the first condition being when there is a continuous region having a length of not less than 100 $\mu$m in a first direction in which $0.1 \leq CDna \leq 1.4$, $CDna$ being the color difference between the $n$th major layer and the nth intermediate layer from the one surface, the first direction being parallel to the cross section and perpendicular to the thickness direction,
   the second condition being when there is a continuous region having a length of not less than 100 $\mu$m in the first direction in which $0.1 \leq CDnb \leq 1.4$, $CDnb$ being the color difference between the $(n+1)$th major layer and the $n$th intermediate layer from the one surface.

2. The silicon nitride substrate according to claim 1, wherein
   a number of the major layers is not less than 2 and not more than 5.

3. The silicon nitride substrate according to claim 1 or 2, wherein
   a thickness of the silicon nitride substrate is not less than 0.3 mm and not more than 2.0 mm.

4. The silicon nitride substrate according to claim 1 or 2, wherein
   a bending strength of the silicon nitride substrate is not less than 600 MPa.

5. The silicon nitride substrate according to claim 1 or 2, wherein
   a thermal conductivity of the silicon nitride substrate is not less than 50 W/(m·K).

6. A silicon nitride substrate production method, comprising:

   making a slurry by mixing an organic solvent and a binder with a silicon nitride powder and a sintering aid powder;
   making a green sheet by forming the slurry;
   making a laminated body by overlaying a plurality of the green sheets at a temperature of not less than 60 °C under a pressure of not less than 0.1 MPa;
   making a dewaxed body by heat-treating the laminated body at a temperature of not more than 1,000 °C; and
   sintering the dewaxed body at a temperature of not less than 1,600 °C and not more than 2,000 °C.

7. The silicon nitride substrate production method according to claim 6, wherein
   the making of the laminated body includes overlaying the plurality of green sheets by using a pair of rollers.

8. The silicon nitride substrate production method according to claim 6 or 7, wherein
   the making of the laminated body includes disposing the plurality of green sheets between a pair of sheets of clean paper, and heating and pressing the plurality of green sheets via the pair of sheets of clean paper.

FIG. 1

FIG. 2

FIG. 3

FIG. 4

```
                    ┌─────────────┐
                    │    START    │
                    └──────┬──────┘
                           │
                           ▼
        ┌──────────────────────────────────────┐
S1 ─────┤            MAKE SLURRY                │
        └──────────────────┬───────────────────┘
                           │
                           ▼
        ┌──────────────────────────────────────┐
S2 ─────┤          MAKE GREEN SHEET             │
        └──────────────────┬───────────────────┘
                           │
                           ▼
        ┌──────────────────────────────────────┐
S3 ─────┤        MAKE LAMINATED BODY            │
        └──────────────────┬───────────────────┘
                           │
                           ▼
        ┌──────────────────────────────────────┐
S4 ─────┤         MAKE DEWAXED BODY             │
        └──────────────────┬───────────────────┘
                           │
                           ▼
        ┌──────────────────────────────────────┐
S5 ─────┤              SINTER                   │
        └──────────────────┬───────────────────┘
                           │
                           ▼
                    ┌─────────────┐
                    │     END     │
                    └─────────────┘
```

FIG. 5

FIG. 6

FIG. 7

## INTERNATIONAL SEARCH REPORT

| International application No. |
| --- |
| **PCT/JP2024/023822** |

### A. CLASSIFICATION OF SUBJECT MATTER

*C04B 35/587*(2006.01)i; *B28B 3/12*(2006.01)i; *B32B 18/00*(2006.01)i; *H05K 1/03*(2006.01)i
FI: C04B35/587; B32B18/00 A; H05K1/03 610D; B28B3/12

According to International Patent Classification (IPC) or to both national classification and IPC

### B. FIELDS SEARCHED

Minimum documentation searched (classification system followed by classification symbols)

C04B35/00-C04B35/84; B28B3/12; B32B18/00; H05K1/03

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2019/235594 A1 (UBE INDUSTRIES, LTD.) 12 December 2019 (2019-12-12) claims, paragraphs [0092]-[0115] | 1-6 |
| Y | | 1-8 |
| Y | JP 2000-280221 A (SUMITOMO METAL ELECTRONICS DEVICES INC.) 10 October 2000 (2000-10-10) paragraph [0027] | 1-8 |
| Y | JP 2004-123498 A (KYOCERA CORPORATION) 22 April 2004 (2004-04-22) paragraph [0016] | 1-8 |
| Y | JP 2003-313081 A (TAIYO INK MFG LTD.) 06 November 2003 (2003-11-06) paragraph [0012] | 7-8 |
| A | | 1-6 |

✓ Further documents are listed in the continuation of Box C.    ✓ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 August 2024** | **13 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

| International application No. |
| --- |
| **PCT/JP2024/023822** |

### C.    DOCUMENTS CONSIDERED TO BE RELEVANT

| Category* | Citation of document, with indication, where appropriate, of the relevant passages | Relevant to claim No. |
| --- | --- | --- |
| Y | JP 2002-134356 A (TDK CORP.) 10 May 2002 (2002-05-10) <br> claims, paragraph [0013] | 8 |
| A | | 1-7 |
| Y | JP 2007-98619 A (DENSO CORPORATION) 19 April 2007 (2007-04-19) <br> claims | 8 |
| A | | 1-7 |
| A | JP 2001-146480 A (NGK SPARK PLUG CO., LTD.) 29 May 2001 (2001-05-29) <br> paragraph [0009] | 1-8 |

## INTERNATIONAL SEARCH REPORT
### Information on patent family members

| International application No. |
| --- |
| **PCT/JP2024/023822** |

| Patent document cited in search report | | | Publication date (day/month/year) | Patent family member(s) | Publication date (day/month/year) |
| --- | --- | --- | --- | --- | --- |
| WO | 2019/235594 | A1 | 12 December 2019 | (Family: none) | |
| JP | 2000-280221 | A | 10 October 2000 | (Family: none) | |
| JP | 2004-123498 | A | 22 April 2004 | (Family: none) | |
| JP | 2003-313081 | A | 06 November 2003 | (Family: none) | |
| JP | 2002-134356 | A | 10 May 2002 | (Family: none) | |
| JP | 2007-98619 | A | 19 April 2007 | (Family: none) | |
| JP | 2001-146480 | A | 29 May 2001 | US          6472075          B1 column 2, lines 37-45 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6399252 B
- JP 2000072552 A, Kokai